# EUROPÄISCHE PATENTSCHRIFT

(11) **EP 2 043 898 B1**
(45) Veröffentlichungstag und Bekanntmachung des Hinweises auf die Patenterteilung: **02.02.2011**
(21) Anmeldenummer: 07786176.3
(22) Anmeldetag: 13.07.2007
(51) Int. Cl.: B61C 17/12

(54) **STEUEREINRICHTUNG UND VERFAHREN ZUM STEUERN EINES SCHIENENFAHRZEUGES**
CONTROL DEVICE AND METHOD FOR CONTROLLING A RAILWAY VEHICLE
DISPOSITIF DE COMMANDE ET PROCEDE POUR COMMANDER UN VEHICULE FERROVIAIRE

(30) Priorität: 20.07.2006 DE 102006034125
(43) Veröffentlichungstag der Anmeldung: 08.04.2009
(73) Patentinhaber: Bombardier Transportation GmbH, 10785 Berlin (DE)
(72) Erfinder: HAMMER, Walter, 68239 Mannheim (DE); KARRER, Klaus, 68309 Mannheim (DE); ALLMEROTH, Klaus, 34127 Kassel (DE)
(74) Vertreter: Patentanwälte Bressel und Partner
(86) Internationale Anmeldenummer: PCT/EP2007/006404
(87) Internationale Veröffentlichungsnummer: WO 2008/009443

(56) Entgegenhaltungen:
- EP-A- 0 687 609
- EP-A- 1 396 375
- EP-A- 1 400 426
- DE-A1- 2 512 466
- DE-U1- 9 402 338
- US-A- 3 638 770

## Beschreibung

Die Erfindung betrifft eine Steuereinrichtung für ein Schienenfahrzeug, mit einer Steuereinheit zur Steuerung einer Antriebseinheit, die ausgestaltet ist, das Schienenfahrzeug anzutreiben, und mit einer Steuereinheit zur Steuerung einer Bremsanlage des Schienenfahrzeugs, wobei die Bremsanlage zumindest ein erstes und ein zweites Bremssystem aufweist, insbesondere ein pneumatisches Bremssystem und ein elektrodynamisches Bremssystem sowie ein dazugehürendes Verfahren, inbesonderegemäss den Merkmalen der kennzeichnenden Teile der unabhängigen Ansprüche 1 und 14. Bei den beiden Steuereinheiten kann es sich auch um dieselbe Steuereinheit handeln. Die Erfindung betrifft außerdem ein Verfahren zum Steuern einer Antriebseinheit, die ausgestaltet ist, das Schienenfahrzeug anzutreiben, und zum Steuern einer Bremsanlage des Schienenfahrzeugs, wobei die Bremsanlage zumindest ein erstes und ein zweites Bremssystem aufweist. Bei dem einen der Bremssysteme kann es sich insbesondere um ein pneumatisches Bremssystem handeln und bei dem anderen Bremssystem um ein elektrodynamisches (im Folgenden kurz: dynamisches) Bremssystem.

Bei dem dynamischen Bremssystem wird die Bremskraft durch die Antriebseinheit oder Teile der Antriebseinheit erzeugt. Unter der "Steuerung der Antriebseinheit" wird im Gegensatz dazu verstanden, dass die Steuerung der Erzeugung einer Antriebswirkung dient. Darüber hinaus verfügen Schienenfahrzeuge heutzutage typischerweise über ein Bremssystem, das eine unmittelbare, mechanische Bremskraft auf die Räder erzeugt. Da, ausgehend von der Steuerung, die Bremswirkung jedoch unter Verwendung eines pneumatischen Systems erzeugt wird, wird das Bremssystem auch als "indirektes Bremssystem" oder "indirekte Bremse" bezeichnet.

Unter einem Schienenfahrzeug wird in dieser Beschreibung auch ein Verband mit mehreren aneinander gekoppelten Einheiten verstanden.

Durch Entwicklungsarbeiten unter Beteiligung der Anmelderin ist bereits ein System zur Steuerung einer Antriebseinheit und einer Bremsanlage eines Schienenfahrzeugs entwickelt worden, das den Fahrzeugführer in die Lage versetzen soll, die Zugkraft und Bremskraft des Schienenfahrzeugs möglichst mit einem einzigen Steuerhebel zu steuern. Der Steuerhebel hat einen Bremsprogrammwahlschalter, mit dem eine Betriebsart ausgewählt werden kann, in der nur die dynamische Bremse wirkt, oder eine Betriebsart ausgewählt werden kann, in der nur die indirekte Bremse wirkt, oder eine Betriebsart ausgewählt werden kann, in der eine Mischung der Bremsart fahrzeugspezifisch und automatisch erfolgt (Automatikbetrieb). Bei Automatikbetrieb steuert ein Bremsrechner die Mischung aus Betätigung der indirekten und dynamischen Bremse.

Das System dient der Lösung von Problemen im Zusammenhang mit grundsätzlichen Besonderheiten einer Lokomotive:
a) Eine gleichzeitige Anforderung von Zugkraft (Antriebskraft) und Bremskraft der indirekten Bremse soll möglich sein. Dazu wird der Steuerhebel in Richtung höherer Zugkraft bewegt. Die Zugkraft wird aber von einem zentralen Rechner gesteuert nur in dem Maße aufgebaut, wie die Bremskraft der indirekten Bremse abnimmt; oder
b) Die Zugkraft wird nur für eine begrenzte Zeit gegen die angelegte indirekte Bremse aufgeschaltet und dann automatisch gesperrt. Es ist jedoch noch offen, mit welcher Bedienhandlung des Triebfahrzeugführers diese von a) abweichende Funktion ausgewählt werden soll;
c) Bei der Wahl der Bremsart mit dem besonderen Bremsprogramm- Wahlschalter im Steuerhebel soll möglich sein:
   c1) Bremsen nur mit dynamischer Bremse. Die indirekte Bremse ist dann deaktiviert, d.h. gelöst.
   c2) Bremsen nur mit der indirekten Bremse. Die dynamische Bremse ist dann deaktiviert, d.h. gelöst.
   c3) Zunächst reagiert nur die dynamische Bremse auf eine Auslenkung des Steuerhebels in den Bremsbereich. Die indirekte Bremse wird von einem zentralen Rechner automatisch zusätzlich aktiviert, wenn die Bremskraft der dynamischen Bremse nicht reicht.
d) Die unter c1) und c2) beschriebenen Vorgänge können auch während des Bremsens ablaufen, d.h. während des Bremsens kann die Bremskraft von dem einen auf das andere System übergehen, wobei die jeweils deaktivierte Bremse vollständig gelöst wird.

Durch Wechsel zwischen den Stellungen c2) und c1) des Bremsprogramm-Wahlschalters soll das so genannte Sägezahnbremsen ausgeführt werden können. Es wird z. B. auf manchen langen Gefällestrecken der Alpen vorgeschrieben und erfordert ein vorübergehendes Lösen der indirekten Bremse für z. B. 90 Sekunden, um ein Erschöpfen der pneumatischen Bremse zu verhindern.

Beim Sägezahnbremsen lösen sich folglich die indirekte Bremse und die dynamische Bremse ab. Es ist also jeweils nur eine Bremsart aktiv. Der Steuerhebel erlaubt nicht ein individuelles Steuern der dynamischen und der indirekten Bremse.

Das System ist außerdem nicht für das so genannte "Aufdrücken" eingerichtet. Es kann zwar ein separates Bedienelement verwendet werden, um die Bremse der Lokomotive allein (aber nicht des Zugverbandes) zu lösen. Es ist aber bislang nicht spezifiziert, wozu dies dienen soll und welche Auswirkungen eine Betätigung des Steuerhebels dann hat. Es ist daher nicht spezifiziert, wie bei Bewegung des Steuerhebels in den Bereich zum Steuern der Zugkraft das Lösen der indirekten Bremse im Wagenzug verhindert werden kann.

Die Steuerung des Zusammenspiels der beiden Bremssysteme im Automatikbetrieb wird einem zentralen Bremsrechner überlassen. Die dazu notwendigen Zugdaten sind in geschlossenen Zügen (Triebzügen) verfügbar, aber nicht in wechselnden Zugzusammenstellungen, z. B. Güterzügen. In diesen Fällen muss ein erfahrener Lokomotivführer eine relativ freie Verfügung über die Bremssysteme haben. Das ist mit dem beschriebenen System bisher nicht möglich.

EP 0 687 609 A1 und DE 695 03 710 T2 offenbaren alle Merkmale des Oberbegriffs der beigefügten unabhängigen Patentansprüche 1 und 14. DE 695 03 710 T2 beschreibt eine Vorrichtung zur Antriebs- oder Bremssteuerung eines Fahrzeuges, insbesondere Schienenfahrzeuges, mit einem beweglichen Steuerhebel, wobei der Hebel in der Lage ist:
- in einer ersten Position 0 positioniert zu werden, in der die Antriebs- oder Bremsfunktionen nicht aktiviert sind;
- in einer instabilen Position 0i gehalten zu werden, in der das Fahrzeug durch Aufhebung der elektrischen Antriebs- und Bremskräfte abrollt;
- eine erste Zone 0+ ausgehend von der ersten Position 0 zu durchlaufen, in der die elektrische Antriebsfunktion aktiviert ist, durch Erhöhen der elektrischen Antriebskraft oder durch Verringern der elektrischen Bremskraft;
- eine zweite Zone 0- ausgehend von der ersten Position 0 zu durchlaufen, in der die elektrische Bremsfunktion aktiviert ist, durch Verringern der elektrischen Antriebskraft oder durch Erhöhen der elektrischen Bremskraft;
- eine dritte Zone -F ausgehend von dem Ende der zweiten Zone 0- zu durchlaufen, in der die pneumatische Bremsfunktion aktiviert ist; und
- in einer zweiten Position URG positioniert zu werden, die auf die dritte Zone -F folgt, in der die elektrische und pneumatische Bremsfunktion gleichzeitig aktiviert sind.

Aus der EP 1 400 426 A2 ist eine Antriebsteuerung für ein Schienenfahrzeug bekannt, die ein Antriebs-Steuerelement und eine Steuereinheit aufweist. Die Steuereinheit ist ausgestaltet, ein Antriebsignal zu generieren, wenn das Antriebs-Steuerelement in eine erste Richtung bezüglich der Steuereinheit bewegt wird, und bei einer Bewegung in eine entgegengesetzte Richtung ein Bremssignal zu generieren. Das Antriebs-Steuerelement weist außerdem einen Schalter auf, dessen Betätigung den Betrieb einer wesentlichen Funktion des Schienenfahrzeugs verursacht. Der Schalter kann dazu verwendet werden, zwischen verschiedenen Bremssystemen zu schalten, wodurch ein optimiertes Bremsen des Schienenfahrzeugs erreicht wird.

Es ist eine Aufgabe der vorliegenden Erfindung, eine Steuereinrichtung mit einem Steuerelement so auszugestalten, dass
- der Triebfahrzeugführer ohne Mitwirkung eines Bremsrechners darüber bestimmen kann, wann und in welchem Grade die indirekte Bremse gelöst wird,
- nur die dynamische Bremse oder nur die indirekte Bremse oder beide angefordert werden können,
- die dynamische Bremse nach Wahl des Triebfahrzeugsführers ohne Mitwirkung eines Bremsrechners verändert werden kann, ohne dass die indirekte Bremse ebenfalls verändert wird,
- die indirekte Bremse nach Wahl des Triebfahrzeugführers ohne Mitwirkung eines Bremsrechners verändert werden kann, ohne dass die dynamische Bremse ebenfalls verändert wird, und/oder
- eine Zugkraft aufgeschaltet werden kann, ohne dass zugleich die indirekte Bremse gelöst wird.

Dabei ist die Erfindung nicht auf die beiden Bremsarten "dynamische Bremse" und "indirekte Bremse" beschränkt. Weitere Bremsarten sind beispielsweise in Spalte 1 der EP 1 400 426 A2 aufgelistet.

Es wird Folgendes vorgeschlagen: Eine Steuereinrichtung für ein Schienenfahrzeug, mit einer Steuereinheit zur Steuerung einer Antriebseinheit, die ausgestattet ist, das Schienenfahrzeug anzutreiben, und mit einer Steuereinheit zur Steuerung einer Bremsanlage des Schienenfahrzeugs. Die Bremsanlage weist zumindest ein erstes und ein zweites Bremssystem auf, insbesondere ein pneumatisches Bremssystem und ein elektrodynamisches Bremssystem. Ferner weist die Steuereinrichtung ein Steuerelement auf, das von einer Person bedient werden kann. Das Steuerelement kann aus einer Nullstellung in einen ersten Stellbereich bewegt werden kann, in dem durch Betätigung, insbesondere durch Bewegung, des Steuerelements die Antriebseinheit gesteuert wird. Das Steuerelement kann aus der Nullstellung in einen zweiten Stellbereich bewegt werden, in dem durch Betätigung, insbesondere durch Bewegung, des Steuerelements die Bremsanlage gesteuert wird. Die Steuereinrichtung weist ein Wahlelement zum Auswählen einer ersten Betriebsart auf, wobei in der ersten Betriebsart durch Betätigung des Steuerelements ausschließlich das erste Bremssystem gesteuert wird. Die Steuereinrichtung weist ein Wahlelement zum Auswählen einer zweiten Betriebsart auf, wobei in der zweiten Betriebsart durch Betätigung des Steuerelements ausschließlich das zweite Bremssystem gesteuert wird.

Die Formulierung "Bewegung aus der Nullstellung in einen Stellbereich" schließt auch mit ein, dass das Steuerelement zwar in definierter, dem Stellbereich entsprechender Weise bewegt wird, aber nach der Bewegung wieder in die Ausgangslage und/oder Ausgangsausrichtung zurückkehrt und dennoch der Stellbereich eingestellt ist. Bei einer anderen Ausführungsform ist unter dem Stellbereich jedoch tatsächlich die Lage (Position) und/oder Ausrichtung des Steuerelements zu verstehen.

Das Wahlelement zum Auswählen der ersten Betriebsart und/oder das Wahlelement zum Auswählen der zweiten Betriebsart sind/ist bevorzugtermaßen in das Steuerelement integriert. Dies erleichtert die Handhabung durch den Fahrzeugführer. Insbesondere kann der Fahrzeugführer dann das oder die Wahlelemente betätigen, ohne den Blick von der Strecke abzuwenden. Grundsätzlich können die Elemente jedoch auch an anderer Stelle angeordnet sein, z. B. neben den Instrumenten an der Oberfläche des Führerpults.

Durch das Wahlelement bzw. durch die Wahlelemente ist es möglich, die Bremsart gezielt vorzugeben, die im folgenden Zeitraum mit Hilfe des Steuerelements eingestellt werden soll. Es bleibt ein bereits eingestellter Steuerzustand des ersten Bremssystems eingestellt, wenn die zweite Betriebsart ausgewählt wird, in der durch Betätigung des Steuerelements ausschließlich das zweite Bremssystem gesteuert wird, und/oder es bleibt ein bereits eingestellter Steuerzustand des zweiten Bremssystems eingestellt, wenn die erste Betriebsart ausgewählt wird, in der durch Betätigung des Steuerelements ausschließlich das erste Bremssystem gesteuert wird. Im Gegensatz zu dem oben beschriebenen System kann allgemeiner formuliert zumindest die jeweils andere Bremsart, die in dem folgenden Zeitraum nicht mehr mit Hilfe des Steuerelements eingestellt werden soll, nicht vollständig deaktiviert werden, d. h. die entsprechende Bremswirkung nicht aufgehoben werden.

Damit erhält der Fahrzeugführer eine einfache, aber vollständige Kontrolle über das Brems- und Antriebsverhalten des Schienenfahrzeugs. Es sind keine zusätzlichen Steuerprogramme (Software) erforderlich, um die Steuerung von mehr als einer Bremsart durchzuführen.

Das Wahlelement zum Auswählen der ersten Betriebsart und/oder das Wahlelement zum Auswählen der zweiten Betriebsart können/kann Schalter oder Taster sein. Z. B. kann in bevorzugter Ausgestaltung jeweils ein Taster als Wahlelement vorgesehen sein. Alternativ kann jedoch z. B. ein Wippschalter mit drei Schalterstellungen verwendet werden, wobei die mittlere (neutrale) Stellung der Betriebsart entspricht, in der beide Bremsarten mit dem Steuerelement gesteuert werden. Auch können noch weitere Taster oder Schalter vorgesehen sein, um die genaue Betriebsart vorzugeben und/oder einzustellen. Beispielsweise kann ein weiterer Taster vorgesehen sein, um eine dritte Bremsart für die ausschließliche Steuerung durch das Steuerelement auszuwählen.

Ein weiterer Gedanke der vorliegenden Erfindung betrifft die Ausgestaltung der Steuerung, wenn von einer ausschließlichen Bremsart (darunter wird eine Bremsart verstanden, die momentan ausschließlich anderer Bremsarten durch das Steuerelement gesteuert werden kann) wieder auf die gemeinsame Steuerung von zwei oder mehr Bremsarten bei Betätigung des Steuerelements übergegangen wird. Bei diesem Übergang kommt es meist zu der Situation, dass zwar der Steuerzustand der ausschließlichen Betriebsart der momentanen Betätigungsstellung bzw. dem momentanen Betätigungszustand des Steuerelements entspricht, nicht jedoch der Steuerzustand der anderen Bremsart bzw. der anderen Bremsarten. Unter einem dem Betätigungszustand entsprechenden Steuerzustand wird verstanden, dass die Bremsart

(insbesondere die Bremskraft oder Bremswirkung gemäß der Bremsart) entsprechend einer eindeutigen, vorgegebenen Zuordnung zwischen dem Betätigungszustand und Steuerzustand der Bremsart eingestellt ist. Dabei kann der Betätigungszustand z. B. durch eine bestimmte Position oder Stellung des Steuerelements eindeutig gegeben sein. In der bevorzugten Ausführungsform, die noch näher beschrieben wird, wird der Steuerzustand jedoch zumindest teilweise abhängig davon eingestellt, dass das Steuerelement über einen kürzeren oder längeren Zeitraum hinweg betätigt wird (zeitabhängige Steuerung). Zum Beispiel ist die Stärke der Bremskraft (alternativ: die Stärke der Antriebskraft) proportional zu der Länge des Zeitraums der Betätigung. Dabei kann der Zeitraum auch unterbrochen sein. Alternativ oder zusätzlich zu der Länge des Zeitraums kann auch wiederholt eine Betätigung erfolgen, mit der der Steuerzustand verändert wird, z. B. die Bremskraft wiederholt um kleine Beträge erniedrigt oder erhöht wird. Bei einer solchen Ausgestaltung des Steuerelements kann eine bestimmte Position oder Stellung des Steuerelements nicht mehr eindeutig einem Betätigungszustand zugeordnet werden. Dennoch kann in diesem Fall z. B. festgestellt werden, ob die aktuell eingestellten Steuerzustände der verschiedenen Bremssysteme bzw.

Bremsarten einander entsprechen. Beispielsweise ist für jede Bremsart ein Einstellungsbereich für den Steuerzustand definiert, der ein Bereich zwischen Null und 100 Prozent der Bremskraft oder Bremswirkung ist. In diesem Fall ist der aktuelle Betätigungszustand ohne Bedeutung. Entscheidend ist in jedem Fall, ob die Steuerzustände der beiden Bremsarten einander entsprechen.

Bevorzugt wird nun eine Ausgestaltung der Steuereinrichtung, bei der, wenn (bei Beendigung der ersten Betriebsart oder bei Beendigung der zweiten Betriebsart) ein aktuell eingestellter Steuerzustand des ersten Bremssystems nicht einem aktuell eingestellten Steuerzustand des zweiten Bremssystems entspricht:
- zunächst ausschließlich das - in Bezug auf einen vorgegebenen Einstellungsbereich - mit niedrigerer Bremskraft oder Bremswirkung eingestellte Bremssystem gesteuert wird, bis einander entsprechende Steuerzustände des ersten und des zweiten Bremssystems erreicht sind, wenn das Steuerelement zur Erhöhung der Bremskraft oder Bremswirkung der Bremsanlage betätigt wird, und/oder
- zunächst ausschließlich das - in Bezug auf einen vorgegebenen Einstellungsbereich - mit höherer Bremswirkung eingestellte Bremssystem gesteuert wird, bis einander entsprechende Steuerzustände des ersten und des zweiten Bremssystems erreicht sind, wenn das Steuerelement zur Erniedrigung der Bremskraft oder Bremswirkung der Bremsanlage betätigt wird.

Auf diese Weise ist gewährleistet, dass bei Betätigung des Steuerelements immer sofort (entsprechend der jeweiligen Betätigung), wie vom Fahrzeugführer gewünscht, entweder eine Erniedrigung oder einer Erhöhung der Bremskraft oder der Bremswirkung erzielt wird. Außerdem wird erreicht, dass sich die Steuerzustände der beiden Bremssysteme baldmöglichst wieder entsprechen. "Niedrigere" bzw. "höhere" Bremskraft oder Bremswirkung ist vorzugsweise jeweils auf einen Bereich von 0 bis 100 Prozent der jeweiligen Bremsart bezogen.

Das Steuerelement kann z. B. ein Hebel und/oder ein Joystick sein. Dabei kann eine Bewegung des Steuerelements zu einer Veränderung der Position und/oder Ausrichtung des Steuerelements führen. Die Bewegung kann insbesondere aus bestimmten Ausgangstellungen heraus gegen eine Federkraft erfolgen, die das Steuerelement wieder in die Ausgangstellung zurückdrängt, wenn der Fahrzeugführer das Steuerelement nicht mehr betätigt.

In bevorzugter Ausgestaltung weist das Steuerelement ein zusätzliches Betätigungselement auf, insbesondere einen Taster oder einen Schalter. Durch Betätigung des zusätzlichen Betätigungselements wird eine Veränderung eines Zustandes der Steuereinrichtung ausgelöst, insbesondere eine der folgenden Veränderungen: eine vorher gesperrte Steuerfunktion (z. B. eine Steuerung einer Antriebskraft der Antriebseinheit) wird freigegeben, ein vordefiniertes Steuersignal wird erzeugt, ein vordefinierter Steuerungsprozess wird begonnen oder beendet und/oder eine vorher ablaufende Steuerfunktion wird gesperrt. Wie noch anhand von Ausführungsbeispielen näher erläutert wird, können unter Verwendung des zusätzlichen Betätigungselements in einfacher Weise Fahrmanöver ausgeführt werden, wie beispielsweise das Aufdrücken. Das zusätzliche Betätigungselement kann alternativ auch separat von dem Steuerelement angeordnet sein, z. B. im Führerpult angeordnet sein. Die durch die Betätigung des zusätzlichen Betätigungselements ausgelöste Veränderung eines Zustandes der Steuereinrichtung kann davon abhängen, in welchem Steuerzustand sich die Steuereinrichtung befindet. Dies ermöglicht den Einsatz des zusätzlichen Betätigungselements in verschiedenen Betriebsituationen.

Das Wahlelement oder die Wahlelemente und gegebenenfalls das zusätzliche Betätigungselement können an einer Oberfläche des Steuerelements ausgebildet sein, wobei die Elemente an der Oberfläche eine unterschiedliche Form aufweisen, so dass eine Unterscheidung anhand der Form möglich ist.

Die Steuereinrichtung kann so ausgestaltet sein, dass das Steuerelement aus der Nullstellung in einer ersten Richtung in den ersten Stellbereich bewegt werden kann und aus der Nullstellung in einer zweiten, von der ersten Richtung verschiedenen Richtung, in den zweiten Stellbereich bewegt werden kann. Zum Beispiel sind die Richtungen genau einander entgegengesetzt.

Die Betätigung des Steuerelements in dem ersten Stellbereich und/oder in dem zweiten Stellbereich kann durch Bewegung des Steuerelements und/oder durch Ausüben einer Kraft auf das Steuerelement erfolgen. Bei der zweiten Alternative ist es daher nicht mehr zwingend erforderlich, dass tatsächlich eine Bewegung des Steuerelements stattfindet. Eine Rückmeldung über ein Ergebnis der Betätigung kann in jedem Fall auch dadurch erfolgen, dass das Ergebnis durch zusätzliche Mittel wie Bildschirme und akustische Mittel für den Fahrzeugführer erkennbar dargestellt bzw. ausgegeben wird.

Insbesondere kann die Steuereinrichtung so ausgestaltet sein, dass das Steuerelement in dem ersten Stellbereich in eine Endstellung gebracht werden kann, in der die Steuerung der Antriebseinheit für eine andere Institution als die Steuereinrichtung freigegeben ist. Alternativ oder zusätzlich kann die Steuereinrichtung so ausgestaltet sein, dass das Steuerelement in dem zweiten Stellbereich in eine Endstellung gebracht werden kann, in der eine vordefinierte Betriebsart der Bremsanlage, insbesondere eine Schnellbremsung, gewählt ist.

Der erste Stellbereich kann eine vordefinierte Stellung des Steuerelements aufweisen, wobei durch Betätigung des Steuerelements in der vordefinierten Stellung eine Antriebskraft der Antriebseinheit erhöht und erniedrigt werden kann. Alternativ oder zusätzlich kann der zweite Stellbereich eine vordefinierte Stellung des Steuerelements aufweisen, wobei durch Betätigung des Steuerelements in der vordefinierten Stellung eine Bremskraft der Bremsanlage oder eine Bremskraft eines der Bremssysteme erhöht und erniedrigt werden kann. Dabei kann sich bei der Betätigung die vordefinierte Stellung ändern. Vorzugsweise kehrt das Steuerelement jedoch bei nachlassender Betätigung oder am Ende der Betätigung wieder in die vordefinierte Stellung zurück, solange das Steuerelement aufgrund der Betätigung nicht einen bestimmten Bewegungsbereich verlässt.

Die Erfindung umfasst auch ein Schienenfahrzeug mit einer Steuereinrichtung in einer der Ausgestaltungen, die in dieser Beschreibung beschrieben werden.

Außerdem umfasst die Erfindung Folgendes: Ein Verfahren zum Steuern einer Antriebseinheit, die ausgestaltet ist, das Schienenfahrzeug anzutreiben, und zum Steuern einer Bremsanlage des Schienenfahrzeugs, wobei die Bremsanlage zumindest ein erstes und ein zweites Bremssystem aufweist, insbesondere ein pneumatisches Bremssystem und ein elektrodynamisches Bremssystem, wobei
- wenn ein Steuerelement, das von einer Person bedient werden kann, aus einer Nullstellung in einen ersten Stellbereich bewegt worden ist, die Antriebseinheit abhängig von einer Betätigung des Steuerelements, insbesondere abhängig von einer Bewegung des Steuerelements, gesteuert wird,
- wenn das Steuerelement aus der Nullstellung in einen zweiten Stellbereich bewegt worden ist, die Bremsanlage abhängig von einer Betätigung des Steuerelements, insbesondere abhängig von einer Bewegung des Steuerelements, gesteuert wird,
- wenn eine erste vordefinierte Betriebsart gewählt worden ist, bei Betätigung des Steuerelements ausschließlich das erste Bremssystem gesteuert wird,
- wenn eine zweite vordefinierte Betriebsart gewählt worden ist, bei Betätigung des Steuerelements ausschließlich das zweite Bremssystem gesteuert wird.

Vorzugsweise bleibt ein bereits eingestellter Steuerzustand des ersten Bremssystems eingestellt, wenn die zweite Betriebsart ausgewählt wird, in der durch Betätigung des Steuerelements ausschließlich das zweite Bremssystem gesteuert wird, und/oder bleibt ein bereits eingestellter Steuerzustand des zweiten Bremssystems eingestellt, wenn die erste Betriebsart ausgewählt wird, in der durch Betätigung des Steuerelements ausschließlich das erste Bremssystem gesteuert wird.

Weitere bevorzugte Ausgestaltungen des Verfahrens ergeben sich aus der Beschreibung der Steuereinrichtung.

Unter Bezugnahme auf die beigefügte Zeichnung werden nun Ausführungsbeispiele der Erfindung beschrieben. Die einzelnen Figuren der Zeichnung zeigen:
- Fig. 1: eine dreidimensionale Darstellung einer besonders bevorzugten Ausführungsform eines Steuerelements mit einem Griff und drei in den Griff integrierten Tastern,
- Fig. 2: eine schematische Darstellung von Teilen einer besonders bevorzugten Ausführungsform der Steuereinrichtung,
- Fig. 3: für ein besonders bevorzugtes Ausführungsbeispiel der Steuereinrichtung einen Bereich, innerhalb dem das Steuerelement bewegt werden kann, um eine Steuerung zu bewirken,
- Fig. 4: für ein anderes Ausführungsbeispiel der Steuereinrichtung einen Bereich, innerhalb dem das Steuerelement bewegt werden kann, um eine Steuerung zu bewirken und
- Fig. 5: eine schematische Darstellung von drei verschiedenen Betriebszuständen der Bremsanlage sowie Übergänge zwischen den Betriebszuständen.

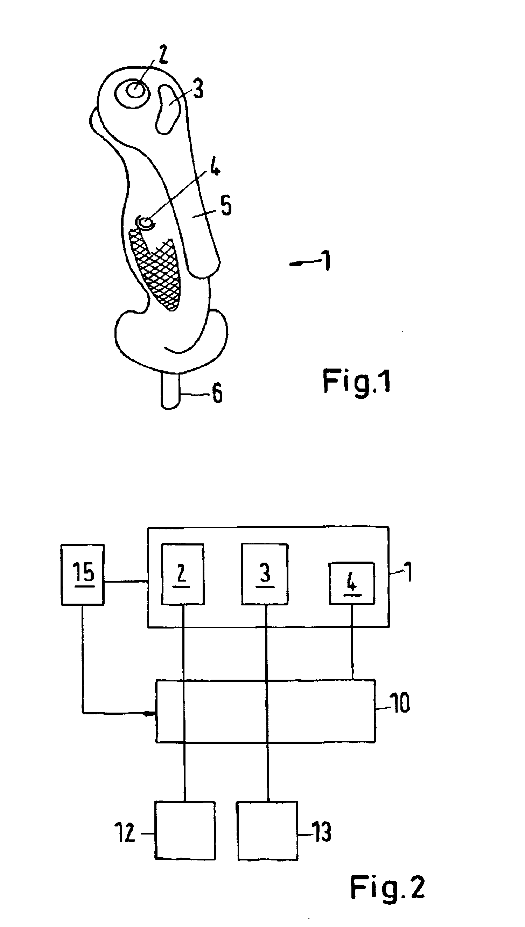

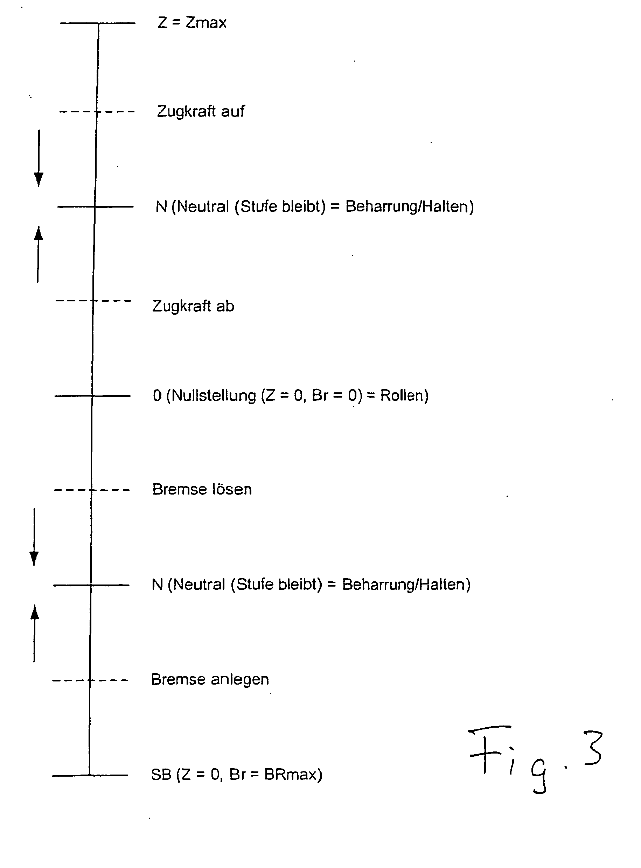

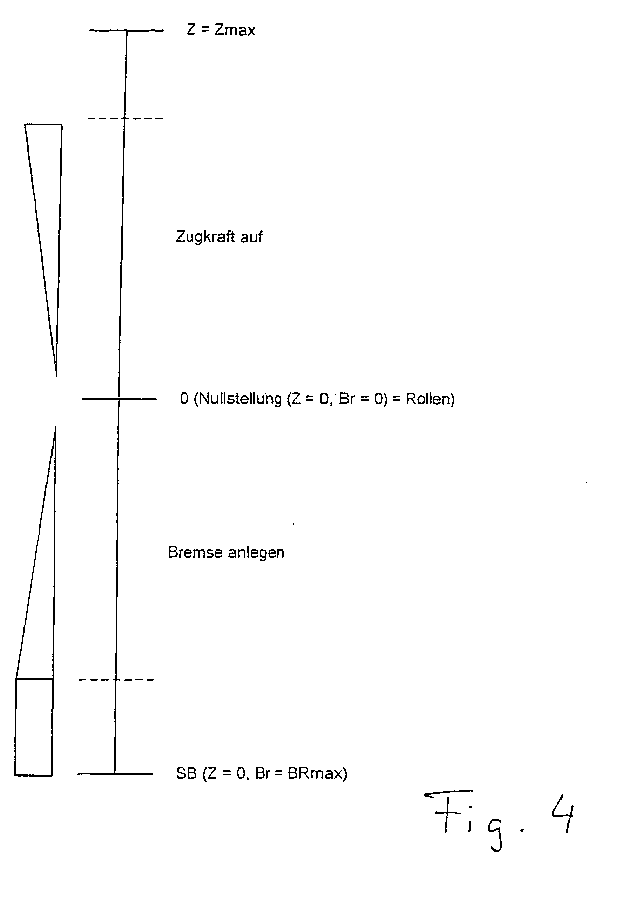

Eine besonders bevorzugte Ausführungsform der erfindungsgemäßen Steuereinrichtung hat die folgenden Merkmale:
- Sie weist einen Stellhebel auf, der entlang einer (z. B. etwa horizontal verlaufenden) Achse nach vom und nach hinten bewegt werden kann und eine Nullstellung z. B. in der Mitte der Achse besitzt. Optional kann der Stellhebel als ein linear beweglicher Schiebeschalter ausgestaltet sein. Fig. 3 und Fig. 4 zeigen jeweils die Achse, wobei "unten" in der Figur "hinten" auf der Achse entspricht.
- Eine Bewegung aus der Nullstellung nach vom bewirkt (wenn optional weitere Voraussetzungen erfüllt sind) eine Erhöhung der Zugkraft.
- Eine Bewegung aus der Nullstellung nach hinten bewirkt (wenn optional weitere Voraussetzungen erfüllt sind) eine Erhöhung der Bremskraft.
- Optional kann die Steuereinrichtung so ausgestaltet sein, dass eine Bewegung aus der Nullstellung nach vorn eine Erhöhung der Zugkraft entsprechend dem Auslenkungsweg oder Auslenkungswinkel bewirkt, z. B. proportional zum Auslenkungswinkel (stellungsabhängige Steuerung). Ein Beispiel hierfür zeigt das Ausführungsbeispiel gemäß Fig. 3.
- Optional kann die Steuereinrichtung so ausgestaltet sein, dass eine Bewegung aus der Nullstellung nach hinten eine Erhöhung der Bremskraft entsprechend dem Auslenkungsweg oder Auslenkungswinkel bewirkt, z. B. proportional zum Auslenkungswinkel (stellungsabhängige Steuerung). Ein Beispiel hierfür zeigt das Ausführungsbeispiel gemäß Fig. 4.
- Optional ist der Stellbereich zwischen der Nullstellung und der vorderen Endstellung Zmax ("Z" steht dabei für "Zugkraft") noch einmal in zwei Hälften geteilt mit jeweils einer Neutralstellung in der Mitte. Fig. 3 veranschaulicht ein entsprechendes Ausführungsbeispiel. In der Neutralstellung N bleibt der Stellhebel stabil, wenn er nicht betätigt wird. Wenn er aus der Neutralstellung N heraus betätigt wird, muss vorzugsweise eine Gegenkraft, insbesondere eine Federkraft, überwunden werden, wobei die Gegenkraft den Stellhebel wieder in die Neutralstellung zurückdrängt. Eine solche "tastende" Bewegung nach vom erhöht die Zugkraft, solange der Hebel in dieser (vor der Neutralstellung liegenden) Stellung gehalten wird; eine tastende Bewegung nach hinten verringert die Zugkraft, solange der Hebel in dieser Stellung gehalten wird. Insbesondere bewirkt die Betätigung des Stellhebels eine umso größere Steuerwirkung, je länger der Stellhebel aus der Neutralstellung heraus gegen die Gegenkraft gehalten wird (zeitabhängige Steuerung). Dabei ist es vorzugsweise unerheblich, wie weit der Stellhebel aus der Neutralstellung heraus bewegt und gehalten wird, solange der Bereich nicht verlassen wird, in dem die Gegenkraft wirkt. In dem Beispiel gemäß Fig. 3 sind die Grenzen dieses Bereichs durch horizontale, gestrichelte Linien markiert, die mit "Zugkraft ab" bzw. Zugkraft auf" bezeichnet sind.
- Optional ist der Stellbereich zwischen der Nullstellung und der hinteren Endstellung SB (dies steht für "Schnellbremsung") in zwei Hälften geteilt mit einer Neutralstellung N in der Mitte (Fig. 3, untere Hälfte). In der Neutralstellung N bleibt der Stellhebel stabil. Eine tastende Bewegung hinter die Neutralstellung erhöht die Bremskraftkraft, solange der Hebel in dieser Stellung gehalten wird; eine tastende Bewegung vor die Neutralstellung verringert die Bremskraft, solange der Hebel in dieser Stellung gehalten wird (zeitabhängige Steuerung). Die Bereichsgrenzen für den Bereich, in dem die Gegenkraft wirkt, sind durch horizontale, gestrichelte Linien markiert, die mit "Bremse lösen" bzw. "Bremse anlegen" bezeichnet sind.
- Eine optionale Endstellung Zmax (siehe z. B. Fig. 3 oder Fig. 4, in dem der Stellhebel z. B. einrastet) nach vom bewirkt optional eine vollständige Freigabe der Zugkraft, die in dieser Stellung von einer anderen Institution, z.B. der automatischen Fahr-/Bremssteuerung (AFB), ohne Begrenzung gesteuert werden kann.
- Eine stabile Endstellung SB (siehe z. B. Fig. 3 oder Fig. 4, in dem der Stellhebel z. B. einrastet) nach hinten bewirkt die Aktivierung der Schnellbremse.
- Ein erster Tastknopf mit der Bedeutung "Nur indirekte Bremse" kann im Stellhebel vorgesehen sein (siehe z. B. Fig. 1, in der der Stellhebel mit dem Bezugszeichen 1 bezeichnet ist). Eine Betätigung des ersten Tastknopfs 2 bewirkt, dass danach nur die indirekte Bremse auf Bewegungen des Stellhebels 1 reagiert, während die Einstellung der dynamischen Bremse unverändert bleibt. Die Rückkehr zum Ausgangszustand, also zur Wiedereinbeziehung der dynamischen Bremse in die Steuerung bei Betätigung des Stellhebels 1, wird erreicht, indem man einen zweiten Tastknopf 3 betätigt, mit der Bedeutung "Nur dynamische Bremse". Eine anschließende zweite Betätigung des zweiten Tastknopfs 3 würde die Betriebsart auswählen, in der bei Betätigung des Stellhebels 1 die dynamische Bremse, nicht aber die indirekte Bremse, gesteuert wird.
- Wie bereits erwähnt, bewirkt eine Betätigung (oder eventuell erst eine zweimalige Betätigung) des zweiten Tastknopfes 3, dass bei Betätigung des Stellhebels 1 ausschließlich die dynamische Bremse gesteuert wird, während die Einstellung der indirekten Bremse unverändert bleibt. Die Rückkehr zum Ausgangszustand, also zur Wiedereinbeziehung der indirekten Bremse in die Steuerung bei Betätigung des Stellhebels 1, wird erreicht, indem man den ersten Tastknopf 2 betätigt. Eine anschließende zweite Betätigung des ersten Tastknopfs 2 würde die Betriebsart auswählen, in der bei Betätigung des Stellhebels 1 die indirekte Bremse, nicht aber die dynamische Bremse, gesteuert wird.
   Optional kann die Steuereinrichtung auch so ausgestaltet sein, dass nach Betätigung eines Tastknopfes 2, 3 eine zweite Betätigung desselben Tastknopfes zum Ausgangszustand zurückführt, d. h. zu dem Zustand, in dem beide Bremsen durch Betätigung des Stellhebels 1 gesteuert werden.
- Optional ist ein dritter Tastknopf 4 im Stellhebel 1 vorgesehen, der im Folgenden als "Quittiertaster" bezeichnet wird. Bei dessen Betätigung wird eine vorbereitete oder vordefinierte Funktion freigegeben oder eine bereits ablaufende Funktion beendet. Dieser Quittiertaster dient optional auch der Verhinderung eines ungewollten Aufschaltens der Zugkraft. Bei Vorwärtsbewegung des Stellhebels 1 wird die Zugkraft nur freigegeben, wenn der Quittiertaster gedrückt wird. Dies kann als elektronische Entriegelung bezeichnet werden.
- Die drei Tastknöpfe sind vorzugsweise (wie in Fig. 1 dargestellt) verschieden geformt. Die zwei ersten Tastknöpfe 2, 3 (oder alternativ: eine Tastwippe, die die Funktion der beiden Tastknöpfe 2, 3 übernimmt) sind vorzugsweise beleuchtet.
- Die Betätigung des Stellhebels 1 führt vorzugsweise zur Erzeugung von ausschließlich elektrischen Signalen. Daher ist keine pneumatische Schnittstelle erforderlich. Auf Aspekte dieser Ausführungsform wird noch unter Bezugnahme auf Fig. 2 eingegangen.
- Vorzugsweise gibt es keine mechanischen Verriegelungen. Der Stellhebel ist in beiden Richtungen (vor und zurück) frei beweglich. Verriegelungen gegen unzulässige Handlungen werden vorzugsweise durch eine elektronische Steuereinheit der Steuereinrichtung vorgenommen.
   Alternativ oder zusätzlich kann jedoch die Entriegelung der Zugkraftvorgabe bei Drücken des Quittiertasters als mechanische Entriegelung ausgeführt sein.

Die konkrete mechanische und gerätetechnische Ausführungsform kann grundsätzlich wie aus dem Stand der Technik bekannt ausgestaltet sein. Die Unterschiede zum Stand der Technik werden vorzugsweise durch die unterschiedliche Auswertung und Verarbeitung der von dem Stellhebel und dessen zusätzlichen Betätigungselementen (z. B. Tastern) erzeugten Signale bewirkt.

Unter Bezugnahme auf Fig. 1 ist bei der dort dargestellten Ausführungsform eines Steuerelements (der Stellhebel 1) erkennbar, dass das Steuerelement einen ergonomisch geformten Griff 5 und die bereits erwähnten bis zu drei Taster 2, 3, 4 (oder auch weitere Taster) aufweisen kann. Die Taster 2, 3, 4 sind an verschiedenen Stellen an der Oberfläche des Griffs 5 angeordnet und unterscheiden sich außerdem in der Form ihrer Tastköpfe. Die Taster 2, 3 im Bereich des oberen Endes des Griffs 5 werden zweckmäßigerweise durch den Daumen des Fahrzeugführers betätigt, während die anderen vier Finger den Griff in seinem mittleren Höhenbereich umfassen. Der dargestellte Stellhebel 1 ist für einen Rechtshänder bzw. für die rechte Hand des Fahrzeugführers ausgelegt. Daher kann auch der tiefer angeordnete dritte Tastknopf durch den Daumen betätigt werden, aber auch durch einen anderen Finger. Die Bedienung mittels verschiedener Finger ist unter Umständen in bestimmten Betriebssituationen erforderlich, beispielsweise wenn der dritte Tastknopf 4 gedrückt gehalten werden muss, während andere Tastknöpfe, beispielsweise der Tastknopf 2, betätigt werden sollen. Im unteren Figurenteil erkennt man einen Schaft 6 des Steuerelements, der einerseits der Übertragung von mechanischen Kräften bei Betätigung des Stellhebels 1 dient und der andererseits in seinem Inneren die elektrischen Leitungen führt, die die Taster bzw. Tastknöpfe 2, 3, 4 mit der Steuereinheit verbinden.

Fig. 2 zeigt schematisch das Steuerelement, welches z.B. das Steuerelement 1 gemäß Fig. 1 ist. Wiederum weist das Steuerelement die drei Taster 2, 3, 4 auf, die die bereits schon beschriebenen Funktionen haben. Die Taster 2, 3 sind über Signalleitungen zum Übertragen der von den Tastern 2, 3 erzeugten Signale mit einer Steuereinheit 10 verbunden. Alternativ oder zusätzlich können die Taster 2, 3 unmittelbar oder über die Steuereinheit 10 mit einem jeweiligen Rechner verbunden sein, nämlich mit einem Bremsrechner oder mit einem gemeinsamen Bremsrechner. In der Ausführungsform gemäß Fig. 2 ist der erste Taster 2 zur Auswahl der Funktion "nur indirekte Bremse" über die Steuereinheit 10 mit einem Bremsrechner 12 zur Steuerung des Betriebs der indirekten Bremse verbunden. Ferner ist der zweite Taster 3 über die Steuereinheit 10 mit einem zweiten Bremsrechner 13 zur Steuerung der dynamischen Bremse verbunden.

Ferner ist der Quittiertaster 4 bzw. der dritte Taster über eine Signalleitung mit der Steuereinheit 10 verbunden, welche abhängig von Signalen des dritten Tasters die Steuerung des Antriebs und/oder der Bremsanlage verändert.

Ferner ist in Fig. 2 ein Signalgeber 15 erkennbar, der mit dem Steuerelement 1 zusammenwirkt und dessen Betätigung bzw. dessen Bewegungen in elektrische Signale umwandelt. Vorzugsweise erkennt der Signalgeber 15 die Winkelstellung des Steuerelements 1, die einer Position entlang der Achse entspricht, entlang der das Steuerelement 1 bewegt werden kann. Bei dieser bevorzugten Ausführungsform erzeugt der Signalgeber 15 Signale, aus denen die absolute Winkelposition des Steuerelements 1 erkannt werden kann. Diese Signale überträgt der Signalgeber 15 zu der Steuereinheit 10, welche daraus die Information ableitet, ob die Antriebskraft oder die Bremsanlage gesteuert werden sollen und in welcher Weise die Bremsanlage oder der Antrieb gesteuert werden soll.

Ferner kann ein nicht in Fig. 2 dargestellter Fahrzeugrechner vorgesehen sein, der zusätzlich zu dem Bremsrechner bzw. zusätzlich zu den Bremsrechnern vorgesehen ist. Der Fahrzeugrechner kann zumindest Teile der Funktionen übernehmen, die zuvor als Funktionen der Steuereinheit 10 beschrieben wurden.

Die Bedeutung der Fig. 3 wurde bereits teilweise erläutert. Die Achse, entlang der das Steuerelement bewegt werden kann, ist durch den langen, vertikalen Strich in Fig. 3 dargestellt. Mit Z ist die Zugkraft abgekürzt. "Br" steht für Bremskraft oder Bremswirkung. In der Nullstellung ist Z = 0 und Br = 0, so dass das Schienenfahrzeug frei rollen kann. In den Neutralstellungen N bleibt die zuvor eingestellte Zugkraft bzw. Bremskraft erhalten, was durch "Beharrung/Halten" bzw. "Stufe bleibt" in Fig. 3 beschrieben ist.

In der alternativen Ausgestaltung gemäß Fig. 4 wird durch Bewegung des Steuerelements aus der Nullstellung heraus nach oben die Zugkraft kontinuierlich mit der fortschreitenden Bewegungsposition erhöht, was durch ein nach oben breiter werdendes Dreieck angedeutet ist. Jedoch findet eine Erhöhung nur bis zu der gestrichelten Querlinie statt, an der das Dreieck oben endet. Darüber kann das Steuerelement lediglich noch in der Endposition Z = Zmax eingerastet werden. Der Steuerbereich mit kontinuierlich veränderbarer Zugkraft ist mit "Zugkraft auf" bezeichnet.

Der sich nach unten erstreckende Bewegungsbereich für die Steuerung der Bremse ist entsprechend ausgestaltet, wobei in der Endstellung eine Schnellbremsung SB stattfindet, bei der die Zugkraft zwangsweise auf Null gesetzt wird und die Bremskraft BRmax maximal ist. Der kontinuierliche Verstellbereich ist mit "Bremse anlegen" bezeichnet.

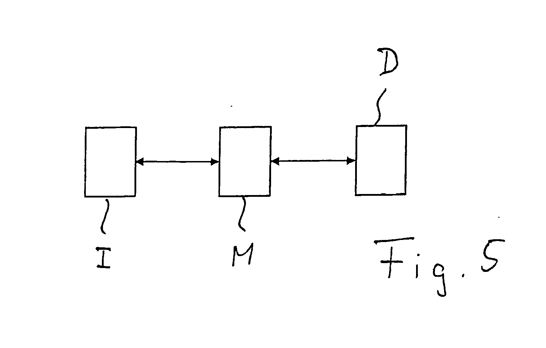

Fig. 5 stellt nochmals ein wesentliches Grundkonzept der vorliegenden Erfindung dar. Es sind drei verschiedene Zustände oder Betriebsarten dargestellt, wobei jeder der Zustände durch ein Rechteck dargestellt ist. In der Mitte ist der Zustand M dargestellt, in dem bei Betätigung des Steuerelements beide (oder bei anderen Ausführungsformen) alle Bremsarten gesteuert werden können, wenn sich das Steuerelement in dem entsprechenden Stellbereich befindet. Links im Bild ist der Zustand I dargestellt, in dem bei Betätigung des Steuerelements ausschließlich die erste Bremsart (z.B. die indirekte Bremse) gesteuert werden kann. Rechts im Bild ist der Zustand D dargestellt, in dem bei Betätigung des Steuerelements ausschließlich die zweite Bremsart (z.B. die dynamische Bremse) gesteuert werden kann.

Den Zustand M verbindet jeweils ein Doppelpfeil mit dem rechts von ihm gelegenen Zustand D und mit dem links von ihm gelegenen Zustand I. Die Doppelpfeile deuten die möglichen Zustandsübergänge in beiden Richtungen an. Dabei ist jedoch ein direkter Zustandsübergang von dem Zustand D in den Zustand I oder umgekehrt nicht möglich. Es muss vielmehr zunächst der Zustand M wieder hergestellt werden. Es ist jedoch auch eine Ausführungsform denkbar, bei der ein solcher direkter Übergang möglich ist.

Bei der bevorzugten Ausführungsform wird der Übergang von dem Zustand M in den Zustand D durch Betätigen des entsprechenden Schaltelements oder Tasters bewirkt. Das Wiederherstellen des Zustandes M wird durch Betätigen des Schaltelements oder Tasters für den anderen Zustand I bewirkt, wenn der Zustand D besteht. Wenn dagegen der Zustand M besteht, führt die Betätigung des Schalters oder Tasters für den Zustand I unmittelbar dazu, dass der Zustand I erreicht wird. Die Rückkehr aus dem Zustand I in den Zustand M wird durch einmalige Betätigung des Schalters oder Tasters für den Zustand D bewirkt. Auch für diese Schaltfunktionalität sind andere Ausführungsformen denkbar. Die beschriebene Ausführungsform hat jedoch den Vorteil, dass eine Betätigung des Schalters oder Tasters für den Zustand D bzw. für den Zustand I zumindest immer dazu führt, dass die entsprechende Bremsart für die Betätigung durch das Steuerelement aktiviert wird.

Im Folgenden werden nun Ausführungsbeispiele des erfindungsgemäßen Verfahrens in bestimmten Manöversituationen beschrieben.

Die erste Situation betrifft das Anfahren am Berg ohne Verwendung des Fahrantriebs als Rückrollschutz. In der Ausgangssituation für dieses Fahrmanöver ist der Zug mit der angelegten indirekten Bremse gegen das Zurückrollen gesichert. Nun wird das Steuerelement aus der Stellung "Bremsen" bei gedrücktem Quittiertaster (bzw. bei dauerhaft betätigtem zusätzlichem Betätigungselement) in den Stellbereich bewegt, in dem die Zugkraft gesteuert wird. Da das zusätzliche Betätigungselement (Quittiertaster) betätigt wird, wird die Zugkraft freigegeben. Die Zugkraft wird nun erhöht, während die indirekte Bremse aber noch nicht gelöst wird, weil das zusätzliche Betätigungselement noch weiter andauernd betätigt wird. Vorzugsweise wird nun die sich im Verlaufe der Zeit aufbauende Zugkraft für den Fahrzeugführer angezeigt, z.B. auf einem Bildschirm. Wenn eine ausreichend hohe Zugkraft erreicht ist, wird die Betätigung des zusätzlichen Betätigungselements beendet und damit der Vorgang des Lösens der indirekten Bremse eingeleitet. Als Folge setzt sich das Schienenfahrzeug in dem Maße vorwärts in Bewegung, wie die abklingende Bremskraft die voreingestellte Zugkraft unterschreitet. Anders ausgedrückt wirkt die Differenz zwischen der Zugkraft und der Bremskraft als Beschleunigungskraft.

Die nächste Fahrsituation betrifft das so genannte Aufdrücken bei Zugverbänden, die zumindest eine Lokomotive aufweisen und bei denen ferner die Lokomotive über eine Hauptluftleitung mit dem Rest des Zugverbandes verbunden ist. Dabei dient die Hauptluftleitung der Betätigung der indirekten Bremse.

Die Ausgangssituation besteht darin, dass der gesamte Zugverband mit der indirekten Bremse gebremst ist und still steht. Nun sollen die Puffer zwischen der Lokomotive und dem Verband zusammengedrückt werden, damit sich die Kupplung lockert und von einem Rangierer ausgehängt werden kann. Anschließend soll die Lokomotive vom Zugverband abgekuppelt werden.

Der Fahrzeugführer in der Lokomotive betätigt zunächst ein weiteres Betätigungselement, so dass ausschließlich für die Lokomotive die indirekte Bremse gelöst wird. Anschließend wird bei betätigtem zusätzlichem Betätigungselement (Quittiertaster) das Steuerelement aus der Stellung "Bremsen" in den Stellungsbereich bewegt, in der die Zugkraft gesteuert werden kann. Wiederum bewirkt die Betätigung des zusätzlichen Betätigungselements, dass einerseits die Zugkraft freigegeben wird und andererseits die indirekte Bremse für den Zugverband noch nicht gelöst wird. Da die Bremse für die Lokomotive aber bereits gelöst wurde, fährt die Lokomotive gegen den Zugverband und drückt die Puffer zusammen. Anschließend wird das weitere Betätigungselement zum separaten Lösen der indirekten Bremse für die Lokomotive wiederum betätigt (oder die bisher andauernde Betätigung beendet), so dass damit die indirekte Bremse auch wieder für die Lokomotive angelegt wird. Daher bleiben die Puffer unter Druck. Das Steuerelement wird dann wieder in die Bremsstellung gebracht und erst jetzt wird das zusätzliche Betätigungselement (Quittiertaster) losgelassen, d.h. seine Betätigung beendet, so dass der Sonderzustand der andauernden Betätigung der indirekten Bremse beendet wird. Die Kupplung kann nun auf einfache Weise ausgehängt werden.

Die nächste Betriebssituation betrifft das so genannte Sägezahnbremsen. Die Ausgangssituation besteht darin, dass das Schienenfahrzeug über eine lange Strecke hinweg hangabwärts fährt. Die Geschwindigkeit soll durch die dynamische Bremse und zusätzlich durch die indirekte Bremse gehalten werden. Der sägezahnartige Verlauf bedeutet jedoch, dass die indirekte Bremse wiederholt gelöst wird, um die indirekte Bremse zu entlasten und insbesondere eine Überhitzung zu vermeiden. Hierzu wird die Steuereinrichtung in den Betriebszustand "nur dynamische Bremse" gebracht und das Steuerelement in den Stellbereich für die Steuerung der Bremse bewegt. Reicht die Kraft der dynamischen Bremse nicht aus, wird die Steuereinrichtung in den Betriebszustand "nur indirekte Bremse" gebracht. Dabei bleibt die dynamische Bremse in dem Zustand vor Einstellung des neuen Betriebszustandes, also bremst weiterhin. Nun kann die indirekte Bremse durch das Steuerelement in der gewünschten Weise eingestellt werden. Dabei kann die indirekte Bremse über lange Zeiträume hinweg z.B. zwischen einem hohen Wert oder ihrem Maximalwert einerseits und einem niedrigen Wert oder Null andererseits verändert werden. Soll das Sägezahnbremsen am Ende der Gefällestrecke beendet werden, können die beiden Bremsarten in der Betriebsart "beide Bremsen" und/oder in den jeweiligen Betriebsarten für nur eine Bremse durch Betätigung des Steuerelements gleichzeitig und/oder nacheinander gelöst werden. Insbesondere ist es möglich, direkt von der Betriebsart "nur indirekte Bremse" in die Betriebsart "beide Bremsen" überzugehen, so dass durch Betätigung des Steuerelements schnellstmöglich wieder beide Bremsen gesteuert werden können. Bei nicht einander entsprechenden Steuerzuständen der beiden Bremsen findet vorzugsweise die oben beschriebene automatische Anpassung statt, wonach beim Lösen der Bremse zunächst nur die Bremsart gesteuert wird, welche einen prozentual höheren Bremswert hatte, bis die Steuerzustände wieder einander entsprechen (insbesondere beide Bremsarten prozentual auf ihren Bereich von Null bis 100 % Bremswirkung bezogen gleich sind).

## Patentansprüche

1. Steuereinrichtung für ein Schienenfahrzeug, mit einer Steuereinheit (10) zur Steuerung einer Antriebseinheit, die ausgestaltet ist, das Schienenfahrzeug anzutreiben, und mit einer Steuereinheit zur Steuerung einer Bremsanlage des Schienenfahrzeugs, wobei die Bremsanlage zumindest ein erstes und ein zweites Bremssystem aufweist, insbesondere ein pneumatisches Bremssystem und ein elektrodynamisches Bremssystem, wobei
• die Steuereinrichtung ein Steuerelement (1) aufweist, das von einer Person bedient werden kann,
• das Steuerelement (1) aus einer Nullstellung in einen ersten Stellbereich bewegt werden kann, in dem durch Betätigung, insbesondere durch Bewegung, des Steuerelements (1) die Antriebseinheit gesteuert wird,
• das Steuerelement (1) aus der Nullstellung in einen zweiten Stellbereich bewegt werden kann, in dem durch Betätigung, insbesondere durch Bewegung, des Steuerelements (1) die Bremsanlage gesteuert wird,
**dadurch gekennzeichnet, dass**
• die Steuereinrichtung ein Wahlelement (2) zum Auswählen einer ersten Betriebsart aufweist, wobei in der ersten Betriebsart durch Betätigung des Steuerelements (1) ausschließlich das erste Bremssystem gesteuert wird,
• die Steuereinrichtung ein Wahlelement (3) zum Auswählen einer zweiten Betriebsart aufweist, wobei in der zweiten Betriebsart durch Betätigung des Steuerelements (3) ausschließlich das zweite Bremssystem gesteuert wird,
wobei ein bereits eingestellter Steuerzustand des ersten Bremssystems eingestellt bleibt, wenn die zweite Betriebsart ausgewählt wird, in der durch Betätigung des Steuerelements (1) ausschließlich das zweite Bremssystem gesteuert wird und/oder
wobei ein bereits eingestellter Steuerzustand des zweiten Bremssystems eingestellt bleibt, wenn die erste Betriebsart ausgewählt wird, in der durch Betätigung des Steuerelements (1) ausschließlich das erste Bremssystem gesteuert wird.

2. Steuereinrichtung nach dem vorhergehenden Anspruch, **gekennzeichnet dadurch, dass** die Steuereinrichtung so ausgestaltet ist, dass, wenn - bei Beendigung der ersten Betriebsart oder bei Beendigung der zweiten Betriebsart - ein aktuell eingestellter Steuerzustand des ersten Bremssystems nicht einem aktuell eingestellten Steuerzustand des zweiten Bremssystems entspricht:
• zunächst ausschließlich das - in Bezug auf einen vorgegebenen Einstellungsbereich - mit niedrigerer Bremskraft oder Bremswirkung eingestellte Bremssystem gesteuert wird, bis einander entsprechende Steuerzustände des ersten und des zweiten Bremssystems erreicht sind, wenn das Steuerelement zur Erhöhung der Bremskraft der Bremsanlage betätigt wird, und/oder
• zunächst ausschließlich das - in Bezug auf einen vorgegebenen Einstellungsbereich - mit höherer Bremswirkung eingestellte Bremssystem gesteuert wird, bis einander entsprechende Steuerzustände des ersten und des zweiten Bremssystems erreicht sind, wenn das Steuerelement zur Erniedrigung der Bremskraft der Bremsanlage betätigt wird.

3. Steuereinrichtung nach einem der vorhergehenden Ansprüche, **gekennzeichnet dadurch, dass** das Steuerelement (1) ein Hebel und/oder ein Joystick ist.

4. Steuereinrichtung nach einem der vorhergehenden Ansprüche, **gekennzeichnet dadurch, dass** das Steuerelement ein zusätzliches Betätigungselement (4) aufweist, insbesondere einen Taster oder einen Schalter, wobei durch Betätigung des zusätzlichen Betätigungselements (4) eine Veränderung eines Zustandes der Steuereinrichtung ausgelöst wird, insbesondere eine der folgenden Veränderungen: eine vorher gesperrte Steuerfunktion (z. B. eine Steuerung einer Antriebskraft der Antriebseinheit) wird freigegeben, ein vordefiniertes Steuersignal wird erzeugt, ein vordefinierter Steuerungsprozess wird begonnen oder beendet und/oder eine vorher ablaufende Steuerfunktion wird gesperrt.

5. Steuereinrichtung nach dem vorhergehenden Anspruch, **gekennzeichnet dadurch, dass** eine durch die Betätigung des zusätzlichen Betätigungselements (4) ausgelöste Veränderung eines Zustandes der Steuereinrichtung davon abhängt, in welchem Steuerzustand sich die Steuereinrichtung befindet.

6. Steuereinrichtung nach einem der vorhergehenden Ansprüche, **gekennzeichnet dadurch, dass** das Wahlelement (2, 3) oder die Wahlelemente (2, 3) und gegebenenfalls das zusätzliche Betätigungselement (4) gemäß einem der beiden vorhergehenden Ansprüche an einer Oberfläche des Steuerelements (1) ausgebildet sind und wobei die Elemente (2, 3, 4) an der Oberfläche eine unterschiedliche Form aufweisen, so dass eine Unterscheidung anhand der Form möglich ist.

7. Steuereinrichtung nach einem der vorhergehenden Ansprüche, **gekennzeichnet dadurch, dass** das Steuerelement (1) aus der Nullstellung in einer ersten Richtung in den ersten Stellbereich bewegt werden kann und aus der Nullstellung in einer zweiten, von der ersten Richtung verschiedenen Richtung, in den zweiten Stellbereich bewegt werden kann.

8. Steuereinrichtung nach einem der vorhergehenden Ansprüche, **gekennzeichnet dadurch, dass** die Betätigung des Steuerelements (1) in dem ersten Stellbereich und/oder in dem zweiten Stellbereich durch Bewegung des Steuerelements (1) und/oder durch Ausüben einer Kraft auf das Steuerelement erfolgt.

9. Steuereinrichtung nach einem der vorhergehenden Ansprüche, **gekennzeichnet dadurch, dass** das Steuerelement (1) in dem ersten Stellbereich in eine Endstellung (Zmax) gebracht werden kann, in der die Steuerung der Antriebseinheit für eine andere Institution als die Steuereinrichtung freigegeben ist.

10. Steuereinrichtung nach einem der vorhergehenden Ansprüche, **gekennzeichnet dadurch, dass** das Steuerelement (1) in dem zweiten Stellbereich in eine Endstellung (BRmax) gebracht werden kann, in der eine vordefinierte Betriebsart der Bremsanlage, insbesondere eine Schnellbremsung, gewählt ist.

11. Steuereinrichtung nach einem der vorhergehenden Ansprüche, **gekennzeichnet dadurch, dass** der erste Stellbereich eine vordefinierte Stellung (N) des Steuerelements (1) aufweist, wobei durch Betätigung des Steuerelements (1) in der vordefinierten Stellung (N) eine Antriebskraft der Antriebseinheit erhöht und erniedrigt werden kann.

12. Steuereinrichtung nach einem der vorhergehenden Ansprüche, **gekennzeichnet dadurch, dass** der zweite Stellbereich eine vordefinierte Stellung (N) des Steuerelements (1) aufweist, wobei durch Betätigung des Steuerelements (1) in der vordefinierten Stellung (N) eine Bremskraft der Bremsanlage oder eine Bremskraft eines der Bremssysteme erhöht und erniedrigt werden kann.

13. Schienenfahrzeug **gekennzeichnet dadurch, dass** das Schienenfahrzeug eine Steuereinrichtung nach einem der vorhergehenden Ansprüche aufweist.

14. Verfahren zum Steuern einer Antriebseinheit, die ausgestaltet ist, das Schienenfahrzeug anzutreiben, und zum Steuern einer Bremsanlage des Schienenfahrzeugs, wobei die Bremsanlage zumindest ein erstes und ein zweites Bremssystem aufweist, insbesondere ein pneumatisches Bremssystem und ein elektrodynamisches Bremssystem, wobei
• wenn ein Steuerelement (1), das von einer Person bedient werden kann, aus einer Nullstellung in einen ersten Stellbereich bewegt worden ist, die Antriebseinheit abhängig von einer Betätigung des Steuerelements (1), insbesondere abhängig von einer Bewegung des Steuerelements (1), gesteuert wird,
• wenn das Steuerelement aus der Nullstellung in einen zweiten Stellbereich bewegt worden ist, die Bremsanlage abhängig von einer Betätigung des Steuerelements (1), insbesondere abhängig von einer Bewegung des Steuerelements (1), gesteuert wird,
**dadurch gekennzeichnet, dass**
• wenn eine erste vordefinierte Betriebsart gewählt worden ist, bei Betätigung des Steuerelements (1) ausschließlich das erste Bremssystem gesteuert wird,
• wenn eine zweite vordefinierte Betriebsart gewählt worden ist, bei Betätigung des Steuerelements (1) ausschließlich das zweite Bremssystem gesteuert wird.
wobei ein bereits eingestellter Steuerzustand des ersten Bremssystems eingestellt bleibt, wenn die zweite Betriebsart ausgewählt wird, in der durch Betätigung des Steuerelements (1) ausschließlich das zweite Bremssystem gesteuert wird, und/oder
wobei ein bereits eingestellter Steuerzustand des zweiten Bremssystems eingestellt bleibt, wenn die erste Betriebsart ausgewählt wird, in der durch Betätigung des Steuerelements (1) ausschließlich das erste Bremssystem gesteuert wird.

15. Verfahren nach dem vorhergehenden Anspruch, **gekennzeichnet dadurch, dass**, wenn - bei Beendigung der ersten Betriebsart oder bei Beendigung der zweiten Betriebsart - ein aktuell eingestellter Steuerzustand des ersten Bremssystems nicht einem aktuell eingestellten Steuerzustand des zweiten Bremssystems entspricht:
• zunächst ausschließlich das - in Bezug auf einen vorgegebenen Einstellungsbereich - mit niedrigerer Bremskraft oder Bremswirkung eingestellte Bremssystem gesteuert wird, bis einander entsprechende Steuerzustände des ersten und des zweiten Bremssystems erreicht sind, wenn das Steuerelement (1) zur Erhöhung der Bremskraft oder Bremswirkung der Bremsanlage betätigt wird, und/oder
• zunächst ausschließlich das - in Bezug auf einen vorgegebenen Einstellungsbereich - mit höherer Bremswirkung eingestellte Bremssystem gesteuert wird, bis einander entsprechende Steuerzustände des ersten und des zweiten Bremssystems erreicht sind, wenn das Steuerelement (1) zur Erniedrigung der Bremskraft oder Bremswirkung der Bremsanlage betätigt wird.

## Claims

1. Control device for a rail vehicle, having a control unit (10) for controlling a drive unit, which is designed to drive the rail vehicle, and having a control unit for controlling a braking installation for the rail vehicle, wherein the braking installation has at least one first and one second braking system, in particular a pneumatic braking system and an electrodynamic braking system, wherein
• the control device has a control element (1) which can be operated by a person,
• the control element (1) can be moved from a null position into a first control range in which the drive unit is controlled by operation, in particular by movement, of the control element (1),
• the control element (1) can be moved from the null position into a second control range, in which the braking installation is controlled by operation, in particular by movement, of the control element (1),
**characterized in that**
• the control device has a selection element (2) for selection of a first operating mode, wherein only the first braking system is controlled by operation of the control element (1) in the first operating mode,
• the control device has a selection element (3) for selection of a second operating mode, wherein only the second braking system is controlled by operation of the control element (3) in the second operating mode,
wherein a control state of the first braking system which has already been selected remains selected when the second operating mode is selected, in which only the second braking system is controlled by operating the control element (1), and/or
wherein a control state of the second braking system which has already been selected remains selected when the first operating mode is selected, in which only the first braking system is controlled by operating the control element (1).

2. Control device according to the preceding claim, **characterized in that** the control device is designed such that when - at the end of the first operating mode or at the end of the second operating mode - a currently selected control state of the first braking system does not correspond to a currently selected control state of the second braking system:
• first of all only the braking system which is selected - with reference to a predetermined selection range - with a lower braking force or braking effect is controlled, until mutually corresponding control states of the first and of the second braking systems are reached, when the control element is operated in order to increase the braking force of the braking installation, and/or
• first of all only the braking system which is selected - with reference to a predetermined selection range - with a higher braking effect is controlled, until mutually corresponding control states of the first and of the second braking systems are reached, when the control element is operated in order to reduce the braking force of the braking installation.

3. Control device according to one of the preceding claims, **characterized by** the control element (1) being a lever and/or a joystick.

4. Control device according to one of the preceding claims, **characterized in that** the control element has an additional operating element (4), in particular a pushbutton or a switch, wherein a change in a state of the control device is initiated by operating the additional operating element (4), in particular one of the following changes: a previously inhibited control function (for example control of a drive force of the drive unit) is enabled, a predefined control signal is produced, a predefined control process is started or ended, and/or a previously running control function is inhibited.

5. Control device according to the preceding claim, **characterized in that** a change, initiated by operating the additional operating element (4), in a state of the control device depends on which control state the control device is in.

6. Control device according to one of the preceding claims, **characterized in that** the selection element (2, 3) or the selection elements (2, 3) and, if appropriate, the additional operating element (4) are/is designed according to one of the two preceding claims, on a surface of the control element (1), and wherein the elements (2, 3, 4) on the surface have a different shape, thus allowing them to be distinguished on the basis of the shape.

7. Control device according to one of the preceding claims, **characterized in that** the control element (1) can be moved from the null position in a first direction into the first control range, and can be moved from the null position in a second direction, which is not the same as the first direction, into the second control range.

8. Control device according to one of the preceding claims, **characterized in that** the control element (1) is operated in the first control range, and/or in the second control range, by moving the control element (1) and/or by exerting a force on the control element.

9. Control device according to one of the preceding claims, **characterized in that** the control element (1) can be moved to a limit position (Zmax) in the first control range, in which limit position (Zmax) control of the drive unit for an entity other than the control device is enabled.

10. Control device according to one of the preceding claims, **characterized in that** the control element (1) can be moved to a limit position (BRmax) in the second control range, in which a predefined operating mode of the braking installation, in particular rapid braking, is selected.

11. Control device according to one of the preceding claims, **characterized in that** the first control range has a predefined position (N) of the control element (1), in which, a drive force of the drive unit can be increased or decreased by operating the control element (1) in the predefined position (N).

12. Control device according to one of the preceding claims, **characterized in that** the second control range has a predefined position (N) of the control element (1), in which a braking force of the braking installation or a braking force of one of the braking systems can be increased or decreased by operating the control element (1) in the predefined position (N).

13. Rail vehicle, **characterized in that** the rail vehicle has a control device according to one of the preceding claims.

14. Method for controlling a drive unit, which is designed to drive the rail vehicle, and for controlling a braking installation of the rail vehicle, wherein the braking installation has at least one first and one second braking system, in particular a pneumatic braking system and an electrodynamic braking system, wherein:
• when a control element (1) which can be operated by a person has been moved from a null position into a first control range, the drive unit is controlled as a function of operation of the control element (1), in particular as a function of movement of the control element (1),
• when the control element has been moved from the null position into a second control range, the braking installation is controlled depending on operation of the control element (1), in particular depending on movement of the control element (1),
**characterized in that**
• when a first predefined operating mode has been selected, only the first braking system is controlled when the control element (1) is operated,
• when a second predefined operating mode has been selected, only the second braking system is controlled when the control element (1) is operated,
wherein a control state of the first operating system which has already been selected remains selected when the second operating mode is selected, in which only the second braking system is controlled by operating the control element (1), and/or
wherein a control state of the second braking system which has already been selected remains selected when the first operating mode is selected, in which only the first braking system is controlled by operating the control element (1).

15. Method according to the preceding claim, **characterized in that** when - at the end of the first operating mode or at the end of the second operating mode - a currently selected control state of the first braking system does not correspond to a currently selected control state of the second braking system:
• first of all only the braking system which is selected - with reference to a predetermined selection range - with a lower braking force or braking effect is controlled, until mutually corresponding control states of the first and of the second braking systems are reached, when the control element (1) is operated in order to increase the braking force or braking effect of the braking installation, and/or
• first of all only the braking system which is selected - with reference to a predetermined selection range - with a higher braking effect is controlled, until mutually corresponding control states of the first and of the second braking systems are reached, when the control element (1) is operated in order to reduce the braking force or braking effect of the braking installation.

## Revendications

1. Dispositif de commande pour un véhicule ferroviaire, avec une unité de commande (10) pour la commande d'une unité d'entraînement qui est configurée afin d'entraîner le véhicule ferroviaire, et avec une unité de commande pour la commande d'une installation de freinage du véhicule ferroviaire, l'installation de freinage présentant au moins un premier et un second système de freinage, en particulier un système de freinage pneumatique et un système de freinage électrodynamique,
- le dispositif de commande présentant un élément de commande (1) qui peut être manipulé par une personne,
- l'élément de commande (1) pouvant être déplacé d'une position initiale dans une première zone de réglage, dans laquelle l'unité d'entraînement est commandée par l'actionnement, en particulier par le déplacement, de l'élément de commande (1),
- l'élément de commande (1) pouvant être déplacé de la position initiale dans une seconde zone de réglage, dans laquelle l'installation de freinage est commandée par l'actionnement, en particulier par le déplacement, de l'élément de commande (1),
**caractérisé en ce que**
- le dispositif de commande présente un élément de sélection (2) pour la sélection d'un premier mode de fonctionnement, dans le premier mode de fonctionnement exclusivement le premier système de freinage étant commandé par l'actionnement de l'élément de commande (1),
- le dispositif de commande présente un élément de sélection (3) pour la sélection d'un second mode de fonctionnement, dans le second mode de fonctionnement exclusivement le second système de freinage étant commandé par l'actionnement de l'élément de commande (3), un état de commande déjà réglé du premier système de freinage restant réglé si le second mode de fonctionnement est sélectionné, dans lequel exclusivement le second système de freinage est commandé par l'actionnement de l'élément de commande (1) et/ou un état de commande déjà réglé du second système de freinage restant réglé si le premier mode de fonctionnement est sélectionné, dans lequel exclusivement le premier système de freinage est commandé par l'actionnement de l'élément de commande (1).

2. Dispositif de commande selon la revendication précédente, **caractérisé en ce que** le dispositif de commande est configuré de sorte que si, à la fin du premier mode de fonctionnement ou à la fin du second mode de fonctionnement, un état de commande actuellement réglé du premier système de freinage ne correspond pas à un état de commande actuellement réglé du second système de freinage :
- tout d'abord exclusivement le système de freinage réglé, par rapport à une zone de réglage prescrite, avec une force ou action de freinage plus faible est commandé, jusqu'à ce que des états de commande correspondant les uns aux autres du premier et du second système de freinage soient atteints si l'élément de commande est actionné pour l'augmentation de la force de freinage de l'installation de freinage, et/ou
- tout d'abord exclusivement le système de freinage réglé, par rapport à une zone de réglage prescrite, avec une action de freinage plus grande est commandé, jusqu'à ce que des états de commande correspondant les uns aux autres du premier et du second système de freinage soient atteints si l'élément de commande est actionné pour la réduction de la force de freinage de l'installation de freinage.

3. Dispositif de commande selon l'une quelconque des revendications précédentes, **caractérisé en ce que** l'élément de commande (1) est un levier et/ou un manche à balai.

4. Dispositif de commande selon l'une quelconque des revendications précédentes, **caractérisé en ce que** l'élément de commande présente un élément d'actionnement (4) supplémentaire, en particulier un bouton-poussoir ou un commutateur, une modification d'un état du dispositif de commande étant déclenchée par l'actionnement de l'élément d'actionnement supplémentaire (4), en particulier l'une des modifications suivantes : une fonction de commande bloquée auparavant (par exemple une commande d'une force d'entraînement de l'unité d'entraînement) est libérée, un signal de commande prédéfini est généré, un processus de commande prédéfini est commencé ou terminé et/ou une fonction de commande se déroulant auparavant est bloquée.

5. Dispositif de commande selon la revendication précédente, **caractérisé en ce qu'**une modification déclenchée par l'actionnement de l'élément d'actionnement supplémentaire (4) d'un état du dispositif de commande dépend de l'état de commande, dans lequel se trouve le dispositif de commande.

6. Dispositif de commande selon l'une quelconque des revendications précédentes, **caractérisé en ce que** l'élément de sélection (2, 3) ou les éléments de sélection (2, 3) et éventuellement l'élément d'actionnement supplémentaire (4) selon l'une quelconque des deux revendications précédentes sont réalisés sur une surface de l'élément de commande (1) et les éléments (2, 3, 4) présentant une forme différente à la surface de sorte qu'une différenciation soit possible à l'aide de la forme.

7. Dispositif de commande selon l'une quelconque des revendications précédentes, **caractérisé en ce que** l'élément de commande (1) peut être déplacé de la position initiale dans une première direction dans la première zone de réglage et de la position initiale dans une seconde direction différente de la première direction, dans la seconde zone de réglage.

8. Dispositif de commande selon l'une quelconque des revendications précédentes, **caractérisé en ce que** l'actionnement de l'élément de commande (1) est effectué dans la première zone de réglage et/ou dans la seconde zone de réglage par le déplacement de l'élément de commande (1) et/ou par l'exercice d'une force sur l'élément de commande.

9. Dispositif de commande selon l'une quelconque des revendications précédentes, **caractérisé en ce que** l'élément de commande (1) peut être amené dans la première zone de réglage dans une position finale (Zmax), dans laquelle la commande de l'unité de l'entraînement est libérée pour une autre institution que le dispositif de commande.

10. Dispositif de commande selon l'une quelconque des revendications précédentes, **caractérisé en ce que** l'élément de commande (1) peut être amené dans la seconde zone de réglage dans une position finale (BRmax), dans laquelle un mode de fonctionnement prédéfini de l'installation de freinage, en particulier un freinage rapide, est choisi.

11. Dispositif de commande selon l'une quelconque des revendications précédentes, **caractérisé en ce que** la première zone de réglage présente une position prédéfinie (N) de l'élément de commande (1), une force d'entraînement de l'unité d'entraînement pouvant être augmentée et réduite par l'actionnement de l'élément de commande (1) dans la position prédéfinie (N).

12. Dispositif de commande selon l'une quelconque des revendications précédentes, **caractérisé en ce que** la seconde zone de réglage présente une position prédéfinie (N) de l'élément de commande (1), une force de freinage de l'installation de freinage ou une force de freinage de l'un des systèmes de freinage pouvant être augmentée et réduite par l'actionnement de l'élément de commande (1) dans la position prédéfinie (N).

13. Véhicule ferroviaire **caractérisé en ce que** le véhicule ferroviaire présente un dispositif de commande selon l'une quelconque des revendications précédentes.

14. Procédé de commande d'une unité d'entraînement qui est configurée afin d'entraîner le véhicule ferroviaire, et de commande d'une installation de freinage du véhicule ferroviaire, l'installation de freinage présentant au moins un premier et un second système de freinage, en particulier un système de freinage pneumatique et un système de freinage électrodynamique,
- si un élément de commande (1) qui peut être manipulé par une personne, a été déplacé d'une position initiale dans une première zone de réglage, l'unité d'entraînement est commandée en fonction d'un actionnement de l'élément de commande (1), en particulier en fonction d'un déplacement de l'élément de commande (1),
- si l'élément de commande a été déplacé de la position initiale dans une seconde zone de réglage, l'installation de freinage est commandée en fonction d'un actionnement de l'élément de commande (1), en particulier en fonction d'un déplacement de l'élément de commande (1),
**caractérisé en ce que**
- si un premier mode de fonctionnement prédéfini a été choisi, exclusivement le premier système de freinage est commandé lors de l'actionnement de l'élément de commande (1),
- si un second mode de fonctionnement prédéfini a été choisi, exclusivement le second système de freinage est commandé lors de l'actionnement de l'élément de commande (1),
un état de commande déjà réglé du premier système de freinage restant réglé, si le second mode de fonctionnement est sélectionné, dans lequel exclusivement le second système de freinage est commandé par l'actionnement de l'élément de commande (1), et/ou un état de commande déjà réglé du second système de freinage restant réglé, si le premier mode de fonctionnement est sélectionné, dans lequel exclusivement le premier système de freinage est commandé par l'actionnement de l'élément de commande (1).

15. Procédé selon la revendication précédente, **caractérisé en ce que** si, à la fin du premier mode de fonctionnement ou à la fin du second mode de fonctionnement, un état de commande actuellement réglé du premier système de freinage ne correspond pas à un état de commande actuellement réglé du second système de freinage :
- tout d'abord exclusivement le système de freinage réglé, par rapport à une zone de réglage prescrite, avec une force ou action de freinage plus faible est commandé, jusqu'à ce que des états de commande correspondant les uns aux autres du premier et du second système de freinage soient atteints si l'élément de commande (1) est actionné pour l'augmentation de la force ou action de freinage de l'installation de freinage, et/ou
- tout d'abord exclusivement le système de freinage réglé, par rapport à une zone de réglage prescrite, avec une action de freinage plus grande est commandé, jusqu'à ce que des états de commande correspondant les uns aux autres du premier et du second système de freinage soient atteints si l'élément de commande (1) est actionné pour la réduction de la force ou action de freinage de l'installation de freinage.
